# EUROPEAN PATENT APPLICATION

(11) **EP 4 686 914 A1**
(43) Date of publication of application: **04.02.2026**
(21) Application number: 25192867.7
(22) Date of filing: 30.07.2025
(51) Int. Cl.: G01C 21/00, G01C 21/16, G01C 21/20, G01C 21/36

(54) **DIFFUSION MODEL TO GENERATE PREDICTIVE IMAGE INERTIAL NAVIGATION AIDING FOR A MOVING PLATFORM**

(30) Priority: 02.08.2024 US 202418792898
(71) Applicant: Atlantic Inertial Systems, Inc., Cheshire, CT 06410 (US)
(72) Inventor: MELNYK, Zenon, Avon, CT, 06001 (US); ENGLER, Joseph, Monticello, IA, 52310 (US)
(74) Representative: Dehns

(57) **Abstract**

A method for generating a predictive navigation system includes defining, based on a mission tasking, a mission route, identifying multiple mission planning images that correspond to a predetermined mission route, identifying geospatial data corresponding to the mission planning images, providing to a model, a mission plan, the mission planning images, and the geospatial data. The model is operated to generate predicted time sequenced and geo-sequenced images that are , provided to a platform control system. The predicted time sequenced and geo-sequenced images are presented during the mission to a pilot in real mission time. The mission plan includes multiple location markers that correspond to locations along the mission route. The time sequenced and geo-sequenced images depict landscapes along the mission plan corresponding to the mission plan. The predicted time sequenced and geo-sequenced images are provided to the platform control system before a mission.

## Description

### BACKGROUND

The present disclosure relates generally to a predictive navigation system, and more particularly, to a predictive navigation system that uses a control system to generate predicted landscape images.

Navigation in many environments often relies on electronic navigation aids such as Global Navigation Satellite Systems (GNSS) and constellations (e.g., Global Positioning System (GPS), including: Galileo, GLONASS, Starlink, etc.) Full Motion Video (FMV) signals and/or other electronic flight control signals. In certain environments, particularly environments where control is contested, GPS, FMV, electronic flight control signals and other navigation aids can be spoofed or jammed. There is a need for a navigation solution that cannot be spoofed or jammed.

### SUMMARY

One aspect of this disclosure is directed to a method for generating a predictive navigation system that includes defining, based on a mission tasking, a mission route, identifying multiple mission planning images that correspond to a predetermined mission route, identifying geospatial data corresponding to the mission planning images, providing to a model, a mission plan, the mission planning images, and the geospatial data. The model is operated to generate predicted time sequenced and geo-sequenced images that are provided to a platform control system. The predicted time sequenced and geo-sequenced images are presented during the mission to a pilot in real mission time. The mission plan includes multiple location markers that correspond to locations along the mission route. The time sequenced and geo-sequenced images depict landscapes along the mission plan corresponding to the mission plan. The predicted time sequenced and geo-sequenced images are provided to the platform control system before a mission.

Another aspect of this disclosure is directed to a mission control system that includes a processor configured to receive from a model multiple predicted time sequenced and geo-sequenced images that depict landscapes along a mission plan corresponding to a mission plan. The processor is further configured to present, during the mission, the predicted time sequenced and geo-sequenced images to a pilot of a vehicle in real mission time to permit the pilot of the vehicle to navigate the vehicle during execution of the mission.

### BRIEF DESCRIPTION OF THE DRAWINGS

FIG. 1 is a block diagram of a predictive navigation system.
FIG. 2A is a graphic representation of a plurality of satellites available to image a designated location.
FIGs. 2B-1 to 2B-4 are photographs of different views of a designated location.

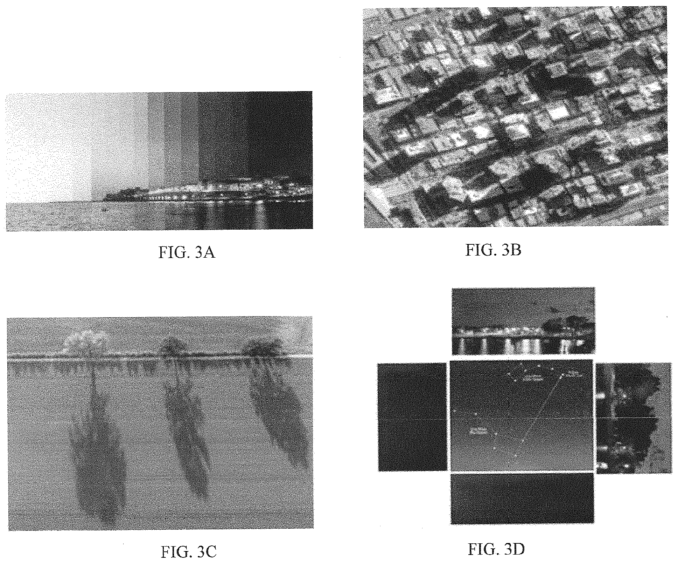

FIG. 3A depicts a designated location with varying lighting at different times of day.
FIG. 3B depicts an urban landscape with shadow lines.
FIG. 3C depicts a rural landscape with shadow lines.
FIG. 3D depicts use of celestial navigation information.

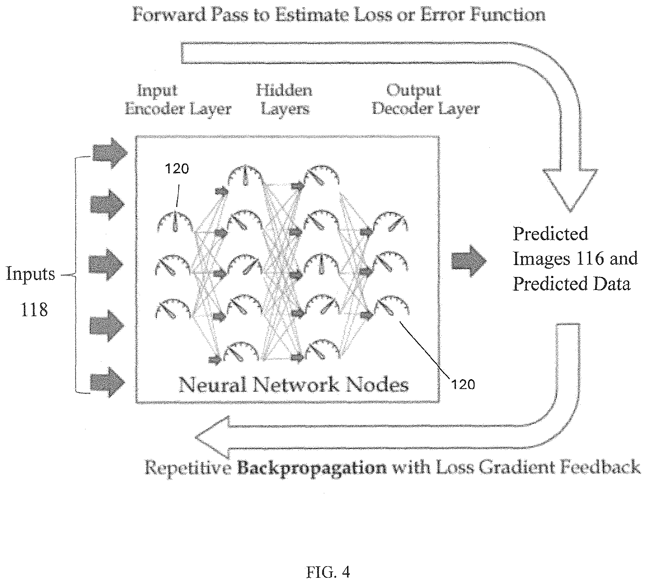

FIG. 4 is a graphic representation of a process to train a model of this disclosure.

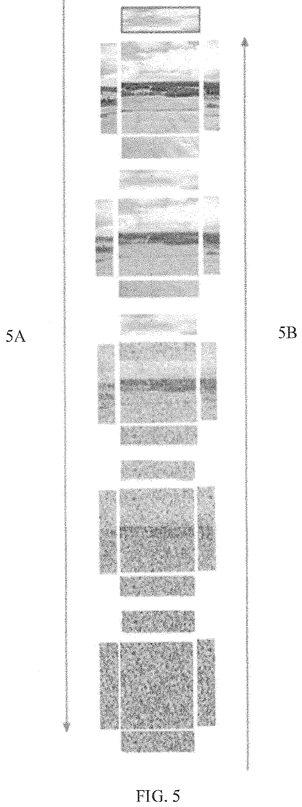

FIG. 5 is a graphic representation of repeating adding or removing signal noise from an image.

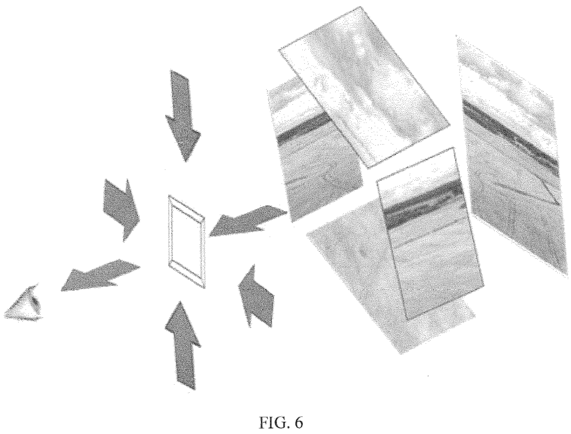

FIG. 6 is a graphic representation of a pilot's view of projected images generated in accordance with this disclosure.

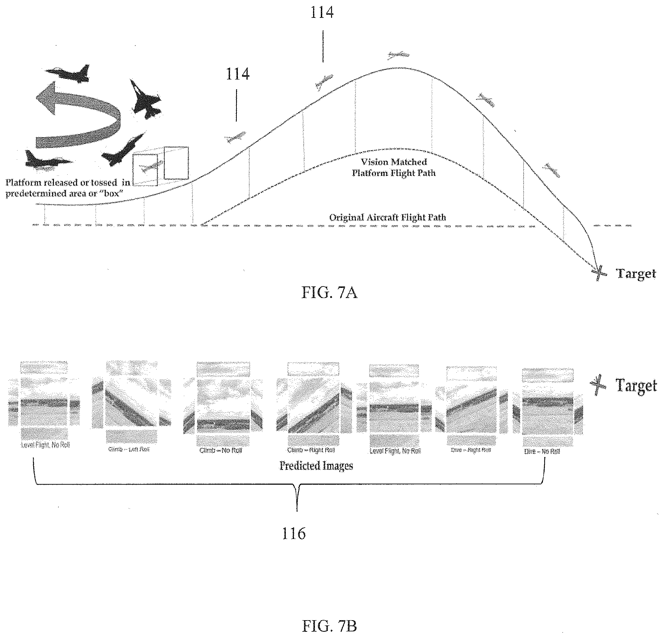

FIG. 7A is a graphic depiction of a mission as discussed in this disclosure predictive navigation system.
FIG. 7B is a graphic representation of mission segments and corresponding projected images for use in a predictive navigation system of this disclosure.

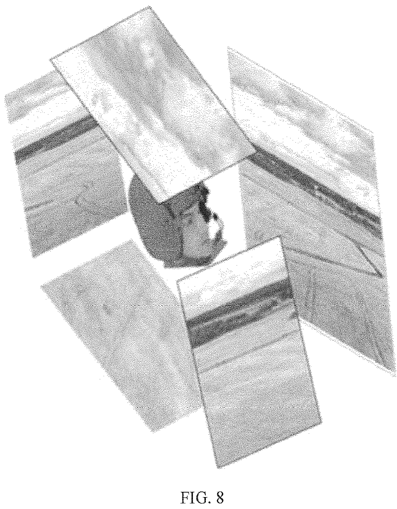

FIG. 8 is a graphic image of an immersive view of projected images generated in accordance with this disclosure.

### DETAILED DESCRIPTION

The present disclosure is directed to a predictive navigation system that uses images taken of a particular area and then generates predicted landscape images that show what an operator would see while navigating a route in the future.

In certain environments, the landscape can be constantly changing. Buildings and landmarks can be demolished over time making the same location unrecognizable when viewed monthly or sometimes even daily. The combination of changing landscape and GPS, FMV, and control signal jamming or spoofing can make navigating such environments difficult and sometimes impossible. Navigation difficulties can greatly hinder pilots (human or autonomous) of various platforms (e.g., crewed or uncrewed aircraft, missiles, terrestrial vehicles, naval platforms, etc.). There is a need for a navigation solution that cannot be jammed or spoofed. The predictive navigation system described herein provides a navigation solution that cannot be jammed or spoofed increasing the navigation capabilities of pilots (human or autonomous) of vehicles navigating challenging environments.

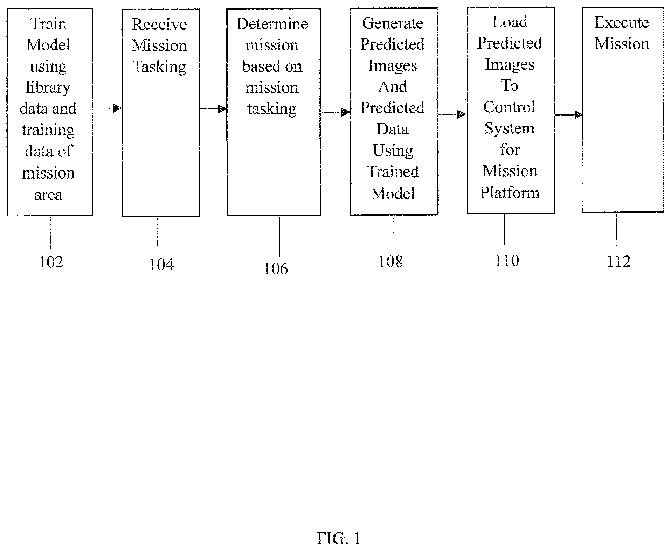

FIG. 1 is a block diagram of the method steps of a predictive navigation system 100 which can include, for example, steps 102, 104, 106, 108, 110, and 112. Predictive navigation system 100 can, for example, include a training module, mission data, library data, training data, a control system, a trained model, predicted images and data, a platform, and a platform control system.

The method of using predictive navigation system 100 begins with selecting a mission area and training a model to generate images of that mission area (Step 102). A mission area is an area of interest in which future missions may be conducted. The mission area can be any area of interest, such as an area in which reconnaissance missions are conducted or any other area of interest. Once the mission area has been decided, a large quantity of existing images and data relevant to navigation is available for use to build a model. This disclosure will refer to images and data selected as useful to the mission plan as library data. Library data is used to train a machine learning model (see FIG. 4) to generate predictive images and data of the mission area. Training data can be collected to supplement library data to provide more information when training the model. Once trained, the model is used to generate predictive images and data for a mission in the mission area. Next, a mission task is received (Step 104). The mission task can include, one or more mission objectives, a list of resources available to execute the mission, a (mission) target, and other mission parameters.

Once the mission task is assigned, the specific details of how the mission will be accomplished must be determined to form a mission plan (Step 106). A mission plan can include multiple location markers that correspond to locations along the mission route. Once the mission plan has be completed, the portion of existing library data useful to the mission plan can be identified as mission library data. Mission library data is used by the model to generate predictive images and data of the mission route, mission plan, and mission platform orientations (Step 108). Training data can be used to supplement library data when generating the predictive images and data of the mission. Next, the generated predictive images and data are loaded onto the control system of the platform to be used to execute the mission (Step 110). Then, the mission is executed (Step 112), which will be discussed in more detail later in this disclosure. The term platform is used in this disclosure to refer to any vehicle in any environment such as an aerospace vehicle (e.g., a crewed or uncrewed aircraft, an aerial munition, etc.), a land vehicle (e.g., a crewed or uncrewed wheeled or tracked vehicle, etc.), a maritime vessel (e.g., a boat, a ship, an underwater projectile, etc.) or any other vehicle appropriate for a particular mission.

### Library Data

Once the mission area (also referred to as area of interest) has been determined, the mission area is used to determine which images and data that are already available are relevant to this particular area of interest. As discussed, this disclosure refers to the images and data that are deemed relevant to this particular mission area collectively as library data. Library data can include all data that captures at least a portion of the mission area. Library data can include images and corresponding data.

Library data can include the location of a camera/sensor generating an image along with geo-referenced (also referred to as geo-sequenced) image integration/fusion, the angle of the sensor taking the image, the date and time that the image was generated, digital terrain elevation data (DTED), magnetic vectors, gravitational gradients, reflections of man-made objects in orbit, and any other data deemed to be relevant. Geospatial data can include the location of a camera/sensor generating an image along with geo-referenced image integration/fusion, the angle of the sensor taking the image, digital terrain elevation data (DTED), magnetic vectors, gravitational gradients, reflections of man-made objects in orbit, and any other data deemed to be relevant. Geo-referenced image integration/fusion can be in the format of WGS 84 coordinate reference system or other appropriate system. Depending on the sensors used to collect library data, library data can further include Lidar images, ultraviolet (UV) images, visible (VIS) images, near-infrared (NIR) images, short-wave infrared (SWIR) images, mid-wave infrared (MWIR) images, long-infrared (LWIR) images, and any other relevant images. Library data can include images from different times of year and images from different times of day (which can have different shadow lines), images from different angles, images from different optical sensor wavelengths, images from different types of platforms, including images from UAVs, manned aircraft, and satellites, etc. Images from a ground-based perspective can be used for land vehicles and shoreline silhouette images can be used for maritime applications. Library data can further include images from Google Earth, commercial satellites, aerial photographs, celestial images, high-end satellite images, or other sources.

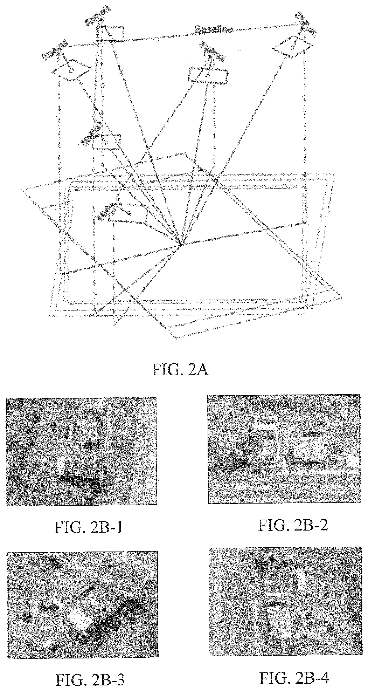

FIG. 2A illustrates multiple satellites capturing images of a single location from different orientations. There is a significant amount of images and data that can be captured and currently exist of a specific target location and a mission area. In one day, many (e.g., forty commercial and 306 other, more or less) satellites can pass over a single point on the earth, capturing images at multiple different angles and orientations. FIGs. 2B-1 to 2B-4 show four images of the same location at different orientations. Dozens of images can be collected of a specific location at different orientations. Each orientation can provide angles and visual information that can be useful when navigating. By amassing images and data relevant to the mission area from different angles, orientations, and altitudes, library data helps train a model to predict what a specific location will look like at a future date and time.

The amount of data in library data 106 can be increased over time. The larger the amount and variation of data in library data 106, the more data can be used to train a model and ultimately the more accurate the trained model can be at generating predicated images and data. In one example, predictive navigation system 100 can include a training module. The training module can be used to train a model, by accepting the mission area as an input, amassing library data and training data, training a model, and generating a trained model as an output. New images and data can be library data at any point during training. In one example, library data can include images and data from outside the mission area.

### Training Data

Training data is a collection of images and other data that can be used to supplement library data to train a model to generate predictive images of a landscape. Training data and library data can also be referred to as mission planning images. Training data can include training images, training data corresponding to training images, and other data (collectively, training data). Training data can be developed by flying over the mission area while using a mission platform's sensors or other appropriate sensors with any appropriate vehicle. Mission platform refers to the type of platform that has been chosen to conduct a mission. Any platform that is equipped with the mission platform's sensors can collect training data. In one example, training data is collected from a different type of platform than the mission platform and is equipped with at least one of the same type of sensors as the mission platform. The larger and more diverse the collection of training images and data included in training data, the more effectively the model can learn, during training, how to generate predicted images 116 of a landscape. In one example, training data can be collected once a specific mission task has been received. In one example, training data can be collected from any platform.

Library data can include images in any possible image format (resolution, dimension, lens, etc.). Training data can include images in the image format that the mission platform's sensors use while navigating or any other appropriate format. A combination of library data and training data can be used to train a model. In one example, further library data or training data can be collected at any point before training or during training if more data is needed for training the model.

The variety of different images included in library data and training data allow the model to consider several factors when generating predicted images 116 and data, including shadow lines as well as other expected lighting conditions and weather conditions during an estimated mission time and mission route of platform 114.

FIG. 3A depicts the same landscape with varying lighting from different times of day. Library data and training data can include images and data from different times of the day. By including images of the same landscape during different times of day, various levels of visibility and shadow lines can be captured, and the model during training will be able to learn how to incorporate predictive light level at an estimated mission time into the predictive images and data that it generates.

FIG. 3B depicts an urban landscape with shadow lines. FIG. 3C depicts a rural landscape with shadow lines. FIG. 3B and 3C exemplify the wide variety of shadow lines that can be captured by analyzing different images in library data and/or training data. By analyzing the various shadow lines present in library images and training images (within library data and training data), the model will be able to learn, during training, how to include shadow lines in the predictive images and data at an estimated mission time, location, and orientation. Including shadow lines and predicted light level (due to time of day) in predictive images and data increases the navigational utility of predicted images 116 and data by adding several factors that make predicted images 116 and data increasingly similar to the actual images visible outside the platform during a mission.

FIG. 3D depicts an imaging system pointing up for near shoreline maritime scene matching. Library data and training data can also include images and data about the celestial views of the sun, moon, stars and man-made objects in orbit from different orientations, angles, and times of day. Through machine learning training on library data and/or training data, the model can also incorporate the location of celestial views (such as the sun, moon, stars, and manmade objects in orbit) into predicted images 116 and data. The model can use information included in library data and training data, such as Lidar, magnetic vectors gravitational gradients data, DTED, and inertial data (such as gyroscopes and accelerometers outputs) to incorporate more information (such time synchronized and geo-referenced information) into predicted images 116 and data.

### Training the Model

FIG. 4 illustrates a model accepting inputs 118 and generating predicted images 116 and data. Machine learning training is used to improve the accuracy of the model at generating predicted images 116 (Step 102). In this disclosure, the term "training" is used to refer to an artificial intelligence (AI) method that teaches a computer how to process data in a way that is inspired by the human brain. In this disclosure, the term "training" is used to refer to the same process as "machine learning training" or "artificial intelligence training."

The term machine learning training, as referred to hereto, refers to the training processes described herein and can refer to artificial intelligence training that does not employ machine learning. Machine learning training is an iterative process. Multiple cycles (or epochs or rounds or iterations) of machine learning training can be conducted before training is considered completed.

Machine learning training teaches the model to use existing images and produce new predicted synthetic landscape images in a format that can be used by a platform. The model can be any artificial intelligence (AI) algorithm or technique including neural networks, convolutional neural networks, diffusion models, a pretrained transformer models, vision transformers (ViT), dense neural networks, deep neural networks, large language models, deep learning, machine learning, linear regression, logistic regression, naive bayes, support vector machines, cognitive computing, enhanced reality, augmented reality, Kalman filters, particle filters, phase lock loop approach, data augmentation techniques including orientation augmentation, blurring, and color augmentation, or any combination of the aforementioned algorithms and techniques.

The model includes training parameters. Determining which training parameters are necessary depends on the type of algorithm that the model is using in the current iteration of training. Examples of training parameters are optimizers, epochs, validation frequency, patience (the number of epochs with no improvements after which training will be stopped), batch size, number of hidden layers, number of total layers, number of nodes 120, distributions, equations, weights, hyperparameters, etc. The value of training parameters, the number of training parameters (such as the number of nodes 120, layers, or nodes 120 in each layer in a neural network), and the AI algorithm being used by the model can be changed at any point during a single iteration of training, or at any point between iterations of training.

In one example, training can be calibrated to prioritize using newer images in the library data and training data over using older images.

In one example, the model can produce predictive synthetic landscape images using signal noise. During training, the model can corrupt and degrade an image in library data through the successive addition of signal (processing) noise, and then the model learns to recover the image by reversing the process through which signal noise was added. FIG. 5 is a graphic representation of how the addition of noise to an image in the library data is used to train the diffusion model on how to generate predicted landscape images. Arrow 5A shows how the successive addition of signal noise can degrade an image. Arrow 5B shows how the model can learn to restore the image by reversing the process through which the signal noise was added. Any kind of signal noise can be added to an image in library data during training including white noise, black noise, gaussian noise, pink (or flicker) noise, Brownian noise, contaminated gaussian noise, power-law noise, or cauchy noise. In another example, the model can use neural radiance field (NeRF) and Gaussian Splatting to generate predicted images and data.

After machine learning training, the same model can be used for multiple missions in the mission area. The model training can be conducted prior to receiving any mission tasks, and then the model can be used for multiple missions in the mission area without retraining. In one example, the model can be used for conducting missions outside the mission area. In one example, the model can be retrained prior to each mission and is fine tuned to each mission. Retraining the model can be helpful in instances where the mission landscape has changed significantly since the model was initially created.

### Memory

Predictive navigation system 100 includes memory. Memory is configured to store information and, in some examples, can be described as a computer-readable storage medium. Memory, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory is a temporary memory. As used herein, a temporary memory refers to a memory having a primary purpose that is not long-term storage. Memory, in some examples, is described as volatile memory. As used herein, a volatile memory refers to a memory that that the memory does not maintain stored contents when power to the memory is turned off. Examples of volatile memories can include random access memories (RAM), dynamic random access memories (DRAM), static random access memories (SRAM), and other forms of volatile memories. In some examples, the memory is used to store program instructions for execution by the processor.

Memory, in some examples, also includes one or more computer-readable storage media. The storage media can be configured to store larger amounts of information than volatile memory and, further, can be configured for long-term storage of information. In some examples, memory includes non-volatile storage elements. Examples of such non-volatile storage elements can include, for example, magnetic hard discs, optical discs, floppy discs, flash memories, or forms of electrically programmable memories (EPROM) or electrically erasable and programmable (EEPROM) memories. Memory can contain all the information stored in predictive navigation system 100.

Predictive navigation system 100 can include a processor. Examples of processors can include one or more of a processor, a microprocessor, a controller, a digital signal processor (DSP), an application specific integrated circuit (ASIC), a field-programmable gate array (FPGA), or other equivalent discrete or integrated logic circuitry. In some examples, memory or any other memory associated with predictive navigation system 100 is used to store program instructions for execution by the processor. Predictive navigation system 100 can include one or more processors suitable for implementing the tasks assigned to predictive navigation system 100. For example. predictive navigation system 100 can include one or more central processing units (CPU), graphics processing units (GPU), etc.

In a single iteration of training, mission area data (data about the mission area), library data, and training data are sent to a model as inputs 118 and the model generates georeferenced predicted images 116 and data as outputs. Predicted image data can, for example, include predicted sensor data, the camera location, the camera angle, date (time of year), the time (time of day), the weather, and other data. Predicted images 116 and data are presented in a format that can be used by the platform. After predicted images 116 and data are generated by the model, the accuracy (or error or loss) of the model is assessed. If the model has an accuracy above a certain predetermined threshold (or error below a predetermined threshold), then machine learning training has completed and the current version of the model is stored in the platform control system (also referred to as control system) as a trained model. If the model does not have an accuracy that is above a predetermined threshold, then another iteration of training is undertaken. In a subsequent iteration of training, something is changed to improve the accuracy of the model. Examples of changes between training iterations can include collecting more library data, collecting more training data, changing the AI algorithm used for the model, or adjusting training parameters. Examples of adjusting training parameters include increasing or decreasing the number of nodes 120 or layers in the model, changing the model weights (ex: edge weights), or any other change to the parameters of the model. Training can be repeated for any number of iterations until the model 112 achieves the desired level of accuracy. The predetermined threshold can be set at any accuracy value or changed at any time during training.

In one example, the model is a neural network. Based on the desired level of image fidelity, any number of nodes 120 and layers within the model can be used to meet desired objectives of a mission. During training, error rates between the input nodes 120 and the output nodes 120 at each layer within the neural network are calculated using a loss (or cost) function. Between iterations of training the node 120 weights and biases of each node 120 can be adjusted to minimize the loss function between the actual outputs and the desired outputs. The tensor weights and biases of each node 120 in the neural network can comprise hundreds of different parameters. Stochastic partial differential equations can be used to identify the relationships between nodes 120. Gradient descent can be used to identify the steepest direction of loss, enabling further adjustments to the parameters of the neural network, further improving training efficiency. Through an iterative and repetitive process of backpropagation the input/output model of the neural network can be refined and strengthened.

Predicted images 116 can be any number of images necessary for the needs of a platform and a set of mission objectives. Predicted images 116 and data can be time synchronized (time sequenced data), so that each predicted image corresponds to what the platform would see at a specific time in a mission. Based on a specific mission time and other mission data that can be provided to the model, the model can generate and incorporate relevant information from that specific mission time into predicted images 116 and data. Additionally, the mission location and corresponding data about the mission location at the specific mission time chosen will also be incorporated into each predicted image and data.

FIG. 6 illustrates how a human pilot can view generated predicted images 116 and data. Time-sequenced and geo-referenced predicted images 116 and data can be generated for each time stamp during a mission. Predicted images 116 and data can be provided individually to the platform in sequence for each time segment during an entire anticipated mission path. Or predicted images 116 and data can be provided in video format by stringing together predicted images 116 and data and adding in data from any patches between the data until the entire desired mission path is simulated.

After machine learning training, the trained model is stored in the control system for the mission platform. Due to the amount of library data and training data used during training, the trained model can produce predicted synthetic landscape images, which can provide the platform with the equivalent of a multi axis prediction mission landscape video.

### Mission Data and Estimated Route Path

After the model is trained, a mission task will be received (Step 104). The mission task can include, one or more mission objectives, a list of resources available to execute the mission (e.g., platform, etc.), a (mission) target, and other mission parameters. Once the mission task is assigned, the specific details of how the mission will be accomplished must be determined (Step 106). These mission details can include, determining a mission area, determining which platform will be used during the mission, estimating a route, and platform orientation during the mission, determining the date in which the mission will be undertaken, determining the time of day/time of year in which the mission will be undertaken, determining a mission plan, etc. The term platform is used in this disclosure to refer to any vehicle or projectile such as a land vehicle, a boat, a ship, an underwater projectile, a missile, a rocket, an aircraft, etc. as appropriate for a particular mission.

Mission data includes all images and data relevant to a particular mission. Mission data can include a route, anticipated platform locations, velocities, or orientations during the mission, type of platform, date of mission, time-synchronized data about the mission, a mission or platform appropriate data frame rate, etc. Time-synchronized data includes all data that can have a mission time attached to the data. Mission time is a particular time during a mission. For example, a time-synchronized location is a location that a platform travels to during a mission plan and has a mission time associated with when the platform should reach that location. Mission data can be used to determine what library data and training data are needed. Once a specific mission task is received, mission data can be provided as an input to the model to generate predicted images and data for the mission.

FIG. 7A is an exemplary depiction of platform route, in this case an aircraft flight with platform release and flight, in predictive navigation system 100. FIG. 7A shows platform 114 being released from an aircraft, following a mission flight route, and reaching a mission target. FIG. 7B is an exemplary depiction of predicted images 116 that platform 114 can use during the mission to aid its navigation towards the target depicted in FIG. 7A. FIG. 7A and FIG. 7B will be discussed together. In step 106, the specifics of the mission will be determined to execute a mission plan as illustrated in FIG. 7A. Each segment of the mission plan can have a different timing, different location, and different platform orientation. FIG. 7B illustrates that predicted images 116 are time-synchronized with the different phases of platform flight depicted in FIG. 7A, so the predicted landscape shown in predicted images 116 are adjusted to account for the mission time, the mission location, the platform orientation, and additional factors for each flight segment of the mission. The roll, pitch, and yaw of platform 114 all effect the landscape as depicted in predictive images 116. FIG. 7B illustrates the variations of the orientation of platform 114 can change the depiction of the same landscape in predictive images 116. In order to generate predictive images 116, a large amount of information needs to be acquired and mission relevance of that information needs to be determined.

### Generate Predicted images 116

The control system for the mission platform can use mission data, the library data, the training data, and the trained model to generate predicted images 116 data for the mission (Step 108). Predicted images 116 are synthetic landscape images that are time-sequenced and geo-referenced (also referred to as geo-sequenced) to the estimated mission time and location. Predicted data is additional data relevant to the mission and/or relevant to predicted images 116. Predicted data can, for example, include predicted sensor data, a sensor (ex: camera) location, a sensor (ex: camera) angle, date (time of year), the time (time of day), the weather, and other data.

Once the control system has generated predicted images 116 and data, the control system can string together predicted images 116, adding additional data to predicted images 116, if necessary, until the entire desired mission path is simulated. The entire desired mission path can be presented as a video instead of as individual predicted images 116. Predicted images 116 can further include the predicted light level at the estimated mission time, shadow lines that are predicted for the mission time, mission location, and platform orientation during the mission, predicted celestial views including the sun, moon, stars, and manmade objects in space from a specific viewing location, viewing orientation, and viewing time. Predicted data can further include, magnetic vector and gravitation gradient data, Lidar information, digital terrain elevation data (DTED), and inertial data.

For land vehicle applications, predicted images 116 and data can be from a ground-based perspective. For maritime applications, shoreline silhouette image information can be predicted. Predicted images 116 can accurately model and simulate the lens structure of sensors on platform, the sensor wavelength sensitives, and image view angles used on platform.

Predicted images 116 can incorporate the effects of terrain elevation variations by using digital terrain elevation data (DTED) information. Incorporating DTED information allows platform to use horizontal views in hilly terrain and still capture to calculate the local platform vertical and calculate the platform's altitude. The platform can use hill profiles, skylines, and other terrain features in one axis or multiple axes for scene matching in order to determine the platform's location. The control system can use date and time information corresponding to images included in library data 106 and training data 108 to consider weather influences on predicted images 116. The control system can prioritize newer images in library data 106 and training data 108 over older images when generating predicted images 116 and data. The control system can incorporate the weather forecast on the intended day and time of the mission in its calculations and adjust predicted images 116 and data accordingly if necessary.

In locations where library data 106 and training data 108 is less robust, the control system can designate an image and/or data confidence measurement. The image and/or data confidence measurement can used to determine how useful predicted images 116 and data will be to the platform. In situations where the image and/or data confidence measurement is low, then the control system can send a signal to platform (before the mission commences) to adjust the manner in which platform uses predicted images 116 and data to scene match. In some cases, the control system can send a signal to platform to refrain from using predicted images 116 and data for scene matching.

Predicted data can include the following time synchronized data: predicted inertial measurements including gyroscope angle changes and accelerometer velocity changes, magnetic vectors, gravitational gradients, and Lidar information. These types of predicted data can be especially useful on platforms that include the respective sensors for each measurement type. These additional parameters can aid the platform to better synchronize predicted images 116 and data vs the actual images and data captured by sensors on the platform during the mission. Predicted images 116 can be generated in a video format with multiple axes on a single frame, each axis on a separate frame, or any other suitable format.

Predicted images 116 and data can be reviewed by a human or a specialized software for accuracy. After being reviewed, the probability of mission success using predicted images 116 and data can be estimated. Based on mission objectives, an alternate mission data (such as an alternate mission route and/or an alternative mission time) can be selected and new predicted images 116 and data can be generated to optimize mission success.

### Load to Platform

Once generated and approved for accuracy (by a human or a specialized software), predicted images 116 and data can be loaded or downloaded to memory on platform before the mission commences (Step 110). Sensors can include inertial sensors (gyroscopes and accelerometers), magnetometers, barometric altimeters, radar altimeters, and Lidar and DTED matching systems. GPS and or other signal based navigation systems can also be used if they can be trusted (will not be jammed or spoofed) during the mission. The control system can be used to detect jamming and spoofing (Step 112). If predicted images 116 and predicted images 116 indicate that platform is in one location, and the signal-based navigation systems indicate that the platform is in a different location, then the control system can determine that the navigation systems could currently be jammed or spoofed. Platform can also utilize deep integration and ultra tight coupling.

In one example, platform can include an inertial navigation system (INS). Imaging information from predicted images 116 and data can be used to reduce the inertial sensor errors, and then the inertial sensors could supplement platform by providing improved scene matching capabilities, which would bound error terms on both systems, the INS and the control system. The gyroscopes and accelerometers in the INS system have bias at zero, scale factor, linearity and other errors. During flight, these errors can accumulate reducing platform location certainty. Using predictive navigation system 100 (which provides external vision-based navigation aid) allows the platform to visually measure how fast and how far it has turned. The vision-based angle change can be compared to the INS calculated angle change. The platform can then apply correction factors to the output of INS system. This same approach can be applied during level flight. If the vision system reports no roll and the INS reports a roll, the bias at zero can be recalibrated. For distance traveled, the twice integrated accelerometer outputs can be compared to the vision-based system estimated distance traveled allowing the platform to apply correction factors.

Kalman filters are used in these systems to estimate error terms based on earlier data and then apply these corrected terms to future data. This also allows GPS data to be fused with or coupled to the gyroscopes and accelerometers data. Vision based information can be used in place of GPS or alongside of GPS depending on the likelihood of GPS being jammed or spoofed. The vision-based system can supply reference data to the platform for an integrated INS output. In addition, the vision-based system could detect GPS jamming or spoofing by comparing platform images to spoofed GPS locations. The INS system can also aid the vision-based system (predictive navigation system 100 can also be referred to as a "vision-based system"). If there are unique and distinguishing landscape features in the mission area, the platform could use INS data to direct the platform so it can observe the more unique landscape features, increasing the platform location awareness. Combining a vision-based system with other systems can provide significant advantages to both systems. One of the dangers of jamming and spoofing is that it can actually recalibrate the INS system on an aircraft, compromising the INS performance even after the spoofing has stopped. Predictive navigation system 100 protects the platform from these dangers by providing an independent navigational tool.

By providing the INS with observable external data, the control system can allow the Kalman filters in NIS to reduce gyroscope and accelerometers bias, drift, and scale factor errors in the same manner the GPS can be used in INS systems, except in this case without actually using the GPS. The steps shown in FIG. 1 can be conducted in sequences and are not limited to the sequence show in FIG. 1.

In one example, predictive navigation system 100 can provide predictive images and data and the actual images captured by the platform to the platform simultaneously. During the mission, the pilot can compare the time-sequenced geo-referenced predicted images and data to the actual images captured by the platform in order to aid the pilot in navigation. Being able to compare these two sets of images is especially useful in situations where the platform has gone off course from the mission route, and the pilot is trying to navigate back on course without access to GPS or other navigation aid being spoofed or jammed or otherwise not available.

The control system can reduce errors or shifts between predicted images 116 and the actual view outside platform by interfacing with the platform control system and moving platform so that predicted images 116 match the actual view outside platform. The fixed angle image system can be coupled directly to the control axis of platform. This allows near direct adjustments of both pitch and roll due to the ability to sense one or more horizon views. Once pitch and roll are adjusted, yaw can also be controlled by using scene matching. Thus, predictive images and data can be used to calibrate pitch, roll, and yaw of the inertial instruments allowing the platform control system to determine the location of the platform and update the flight path of the platform if necessary.

In one example, when there are errors or shifts between predicted images 116 and the actual view outside the platform, the control system can determine the platform is off course of the mission route. If the control system determines that the platform is off course of the mission route, the control platform can alert the pilot that the platform is off course of the mission route. The alert can be any type of visual or auditory signal. In one example, the control system can use the control axis or otherwise adjust the course of the platform to aid the platform in returning to the mission route if the platform is off course for a predetermined amount of time.

In one example, platform can use optical flow to measure forward velocity. While using optical flow, having horizon awareness allows platform to separate angular image sensor movement from linear sensor movement.

The control system can identify the location of platform in space using two points on the ground. Once the control system identifies two points on the ground, knows the distance between these points, has an estimated pitch angle form the side horizon views, and has an estimated roll angle from the front and side views, the control system can identify its location in space using geometry.

In one example, the control system can adjust and synchronize the image frame rate of predicted images 116 and data to the actual images (visible from the platform) frame rate and data during the mission to adjust for any errors in mission data 104. Errors in mission data 104 can include errors in the estimated route, estimated platform velocity, estimated platform orientation, and/or mission route discrepancies. In one example, the number of predicted images per second shown to the pilot (or autonomous vehicle) is based on the required platform capability.

In one example, if the platform flies into an area and predicted images 116 no longer match the actual images that the platform is seeing, then the control system can enter a seek and acquire mode. By entering seek and acquire mode, the control system can direct platform to gently roll or pitch to increase the visible scan area under platform to find a scene match. Having the ability to simultaneously sense the horizon and the terrain below platform allows the control system to directly measure the look down angle, significantly improving the scene matching capability.

In one example, if the anticipated target of a mission (e.g. a vehicle) is not in the area of observation of the control system and the control system is very confident that it is over the general target area, platform can have a prioritized image library of suitable targets and engage a target of opportunity using Automatic Target Recognition (ATR). The platform can detect or discriminate any moving objects in its field of view against a stationary background by comparing the actual images captured by the sensors to the predicted images and data. The platform could automatically fly toward the moving object by having the platform control system adjust the course of the platform.

FIG. 8 illustrates an immersive view of a pilot viewing the predicted images 116 and data. In one example, prediction flight system 100 can include a multi-axis viewing system. The multi-axis viewing system can be aligned to the same axis as the control system, allowing the control system to measure airframe flexing and bending moments which can be used to predict structural stiffness health and remaining platform structural life. One example of a multi-axis viewing system is a 5-axis imaging system. A 5-axis imaging system is equivalent to an aircraft pilot having an unobstructed glass floor below, a glass skylight, two side windows, and a large glass wind screen. Using a 5-axis imaging system a pilot of platform can experience horizon views, ground views as well as celestial views along with the possibility of having an awareness of images in IR, SWIR, and other portions of the electromagnetic spectrum not directly visible. In addition, the pilot would have a magnetic vector and gravitational gradients awareness.

Some of the benefits of using a multi-axis imaging system over a steerable, single axis viewing system, includes a lower cost and the ability to view multiple items simultaneously without delay and alignment errors. Moving a single axis viewing system can cause time delays and can include variable and non-repeatable alignment errors. These issues are not present in a fixed angle implementation.

In one example, predictive navigation system 100 can include an improvement module. If during a mission, the actual images captured by the platform during the mission are stored and retrieved, then after the mission improvement module could be used to compare predicted images 116 to the actual images obtained during the mission, and the actual images used during the mission could be used to refine, train, or enhance training module 102, library data 106, training data 108, and/or the model 112. The improvement module provides a method to return images of a battlefield, without requiring battlefield electronic transmission for enhanced intelligence and surveillance. The improvement module can be used to improve library data 106 and training data 108 after fling in a GPS or electronic contested area.

Predictive navigation system 100 can reduce the need for autonomous vehicle (such as drones) pilot training, skill variability, and signal transmission delays while enabling a higher bandwidth flight control capability which can allow predictive navigation system 100 to outperform human drone pilots. Predictive navigation system 100 does not depend on any external signals and cannot be spoofed or jammed rendering current and future electronic counter measures ineffective.

Predictive navigation system 100 can eliminate the dependance on GPS for a platform and the possibility of an adversary jamming full motion video signals from the platform to the pilot and flight control signals from the pilot back to the platform, removing a major vulnerability of current navigation systems. Predictive navigation system 100 takes advantage of time-based cycles of image repeatability and predictability (predictable shadow lines throughout the day, man-made surface lights at night, and the changes from season to seasons throughout the year, including predictable foliage changes and snow cover) within a landscape and leverages the large amount of image information available over areas of interest to enable predictions of a given location in the observable future.

This system of this disclosure takes an enormous amount of data and selects useful pieces of data to generate a beneficial navigation aid for a pilot or autonomous system. Predictive images and data can revolutionize navigation in areas that are GPS jammed or spoofed. This system of this disclosure enables low-cost inertial sensors to complete tasks once reserved for high end inertial sensors. This system of this disclosure can provide accurate three-dimensional spatial awareness capability using low-cost MEMS gyroscopes and accelerometers, replacing high-cost Ring Laser Gyroscopes, Fiber Optic Gyroscopes, and other more expensive inertial instruments.

While the system of this disclosure has been described with reference to an exemplary embodiment(s), it will be understood by those skilled in the art that various changes may be made and equivalents may be substituted for elements thereof without departing from the scope of the disclosure. In addition, many modifications may be made to adapt a particular situation or material to the teachings of the system of this disclosure without departing from the essential scope thereof. Therefore, it is intended that the system of this disclosure not be limited to the particular embodiment(s) disclosed, but that the system of this disclosure will include all embodiments falling within the scope of the appended claims.

### Discussion of Possible Embodiments

The following are non-exclusive descriptions of possible embodiments of the present invention.

A method for generating a predictive navigation system that includes defining, based on a mission tasking, a mission route, identifying multiple mission planning images that correspond to a predetermined mission route, identifying geospatial data corresponding to the mission planning images, providing to a model, a mission plan, the mission planning images, and the geospatial data. The model is operated to generate predicted time sequenced and geo-sequenced images that are provided to a platform control system. The predicted time sequenced and geo-sequenced images are presented during the mission to a pilot in real mission time. The mission plan includes multiple location markers that correspond to locations along the mission route. The time sequenced and geo-sequenced images depict landscapes along the mission plan corresponding to the mission plan. The predicted time sequenced and geo-sequenced images are provided to the platform control system before a mission.

The method of the preceding paragraph can optionally include, additionally and/or alternatively, any one or more of the following features, configurations and/or additional components:

A further embodiment of the foregoing method, wherein operating the model to generate a plurality of predicted time sequenced and geo-sequenced images further includes (a) generating a provisional set of predicted time sequenced and geo-sequenced images, (b) reviewing the provisional set of predicted time sequenced and geo-sequenced images to determine if the provisional set depicts the planned mission region to an acceptable degree, (c) if the provisional set is determined not to depict the planned mission region to an acceptable degree, rerunning the model with different weightings to generate another provisional set of predicted time sequenced and geo-sequenced images, and (d) repeating steps (a) to (c) until the provisional set of predicted time sequenced and geo-sequenced imaged are determined to depict the planned mission region to an acceptable degree.

A further embodiment of the foregoing method, wherein the model is a neural network that uses a plurality of nodes to generate the plurality of predicted time sequenced and geo-sequenced images.

A further embodiment of the foregoing method, further comprises presenting, during the mission, the predicted time sequenced and geo-sequenced images to the pilot, and presenting images captured in real time, during the mission, using a platform sensor to the pilot.

A further embodiment of the foregoing method, further comprises comparing the predicted time sequenced and geo-sequenced images to the images captured in real time, during the mission, using the platform sensor, and sending an alert to the pilot if the predicted time sequenced and geo-sequenced images do not match the real time images.

A further embodiment of the foregoing method, further comprises comparing the predicted time sequenced and geo-sequenced images to the images captured in real time, during the mission, using the platform sensor; and rerouting the platform, during the mission, using the platform control system, to reduce errors between the predicted time sequenced and geo-sequenced images and the images captured using the platform sensor.

A further embodiment of the foregoing method, further comprises sending the predicted time sequenced and geo-sequenced images to an inertial navigation system, and reducing inertial sensor errors in the inertial navigation system using the predicted time sequenced and geo-sequenced images.

A further embodiment of the foregoing method, further comprises adjusting, during the mission, the image frame rate of the predicted time sequenced and geo-sequenced images to match the frame rate of the images captured using the platform sensor.

A further embodiment of the foregoing method, further comprises presenting, during the mission, the predicted time sequenced and geo-sequenced images to a pilot in real mission time using a multi-axis viewing system.

A mission control system that includes a processor configured to receive from a model a plurality of predicted time sequenced and geo-sequenced images that depict landscapes along a mission plan corresponding to a mission plan. The processor is further configured to present, during the mission, the plurality of predicted time sequenced and geo-sequenced images to a pilot of a vehicle in real mission time to permit the pilot of the vehicle to navigate the vehicle during execution of the mission.

## Claims

1. A method for generating a predictive navigation system comprising:
defining, based on a mission tasking, a mission route;
identifying a plurality of mission planning images, wherein the plurality of mission planning images correspond to a predetermined mission route;
identifying a plurality of geospatial data corresponding to the plurality of mission planning images;
providing to a model:
a mission plan including a plurality of location markers that correspond to locations along the mission route;
the plurality of mission planning images, and
the plurality of geospatial data;
operating the model to generate a plurality of predicted time sequenced and geo-
sequenced images,
wherein the plurality of time sequenced and geo-sequenced images depicts landscapes along the mission plan corresponding to the mission plan;
providing, to a platform control system, the plurality of predicted time sequenced
and geo-sequenced images,
wherein the plurality of predicted time sequenced and geo-sequenced images are provided to the platform control system before a mission; and
presenting, during the mission, the predicted time sequenced and geo-sequenced images to a pilot in real mission time.

2. The method for generating a predicted navigation system of claim 1, wherein operating the model to generate a plurality of predicted time sequenced and geo-sequenced images further includes (a) generating a provisional set of predicted time sequenced and geo-sequenced images; (b) reviewing the provisional set of predicted time sequenced and geo-sequenced images to determine if the provisional set depicts the planned mission region to an acceptable degree; (c) if the provisional set is determined not to depict the planned mission region to an acceptable degree, rerunning the model with different weightings to generate another provisional set of predicted time sequenced and geo-sequenced images; and (d) repeating steps (a) to (c) until the provisional set of predicted time sequenced and geo-sequenced imaged are determined to depict the planned mission region to an acceptable degree.

3. The method for generating a predicted navigation system of claim 1 or 2, wherein the model is a neural network that uses a plurality of nodes to generate the plurality of predicted time sequenced and geo-sequenced images.

4. The method for generating a predicted navigation system of any preceding claim, further comprising:
presenting, during the mission, the predicted time sequenced and geo-sequenced images to the pilot; and
presenting images captured in real time, during the mission, using a platform sensor to the pilot.

5. The method for generating a predicted navigation system of claim 3, further comprising:
comparing the predicted time sequenced and geo-sequenced images to the images captured in real time, during the mission, using the platform sensor; and
sending an alert to the pilot if the predicted time sequenced and geo-sequenced images do not match the real time images.

6. The method for generating a predicted navigation system of claim 3, further comprising:
comparing the predicted time sequenced and geo-sequenced images to the images captured in real time, during the mission, using the platform sensor; and
rerouting the platform, during the mission, using the platform control system, to reduce errors between the predicted time sequenced and geo-sequenced images and the images captured using the platform sensor.

7. The method for generating a predicted navigation system of any preceding claim, further comprising:
sending the predicted time sequenced and geo-sequenced images to an inertial navigation system; and
reducing inertial sensor errors in the inertial navigation system using the predicted time sequenced and geo-sequenced images.

8. The method for generating a predicted navigation system of any preceding claim, further comprising:
adjusting, during the mission, the image frame rate of the predicted time sequenced and geo-sequenced images to match the frame rate of the images captured using the platform sensor.

9. The method for generating a predicted navigation system of any preceding claim, further comprising:
presenting, during the mission, the predicted time sequenced and geo-sequenced images to a pilot in real mission time using a multi-axis viewing system.

10. A mission control system comprising:
a processor configured to receive from a model a plurality of predicted time sequenced and geo-sequenced images that depict landscapes along a mission plan corresponding to a mission plan;
wherein the processor is further configured to present, during the mission, the predicted time sequenced and geo-sequenced images to a pilot of a vehicle in real mission time to permit the pilot of the vehicle to navigate the vehicle during execution of the mission.
